# EUROPEAN PATENT APPLICATION

(11) **EP 4 318 783 A1**
(43) Date of publication of application: **07.02.2024**
(21) Application number: 22188910.8
(22) Date of filing: 05.08.2022
(51) Int. Cl.: H01M 50/533, H01M 50/54

(54) **CURRENT COLLECTOR FOR A BATTERY CELL**

(71) Applicant: Northvolt AB, 112 47 Stockholm (SE)
(72) Inventor: Acosta, Rafael, 112 47 Stockholm (SE)
(74) Representative: AWA Sweden AB

(57) **Abstract**

There is disclosed herein a battery cell (100), comprising an electrode assembly (106), and a current collector (300) for connecting the electrode assembly (106) to a terminal (104) of the battery cell (100). The current collector (300) comprises a first section (302) arranged along a first side (106a) of the electrode assembly (106), and configured for attachment to the electrode assembly (106). The current collector (300) further comprises a second section (304) extending from a first end of the first section (302) along the first side (106a) of the electrode assembly (106), comprising a tapered surface (305) configured to avoid contact with the electrode assembly (106) during a crush event (F) along the first side (106a) of the electrode assembly (106).

## Description

### Technical Field

The present disclosure relates to components for battery cells. In particular, the present disclosure relates to an improved current collector for a battery cell, a method for manufacturing such a current collector from sheet metal, and a battery cell comprising such an improved current collector.

### Background

In addressing climate change, there is an increasing demand for rechargeable batteries, e.g. to enable electrification of transportation and to supplement renewable energy. Such batteries typically comprise a number of battery cells coupled together to provide the desired voltage and current.

Rechargeable or 'secondary' batteries find widespread use as electrical power supplies and energy storage systems. For example, in automobiles, battery packs formed of a plurality of battery modules, wherein each battery module includes a plurality of electrochemical cells, are provided as a means of effective storage and utilization of electric power.

Several different form factors exist for the electrochemical cells applied in secondary batteries depending on their intended application field. In automotive applications, the most common cell types are cylindrical, prismatic and pouch cells.

A battery cell stores electrical energy in an electrode assembly, which may be stacked, and referred to as an 'electrode stack', or rolled, and referred to as an 'electrode roll' or a 'jelly roll'. Stored electrical energy may then be collected and transferred to the terminals of the battery cell via current collectors, which may be adapted for (electrical) connection to the terminal(s) and to the electrode assembly. One current collector may connect between an anode of the electrode assembly and an anode terminal (negative electrode), while another current collector may connect between a cathode of the electrode assembly and a cathode terminal (positive electrode).

### Summary

It is realized as a part of the present disclosure that, for current collectors arranged at a side of an electrode assembly, during a sideways crush event (e.g., caused by a car crash, a dropping of the cell, etc.), the current collector can be pushed into the electrode assembly.

If the electrode assembly is pierced or otherwise significantly damaged, a catastrophic failure of the battery cell may be caused. For example, if the anode and cathode of the electrode assembly are brought into electrical contact with each other, a short circuit may be caused, which may cause the battery cell to overheat, catch on fire, and/or explode.

As such, it is further realized as a part of the present disclosure that the current collector may be adapted to reduce the risk of severely damaging the electrode assembly in this way, during such a crush event.

In particular, according to an aspect of the present disclosure, there is provided a battery cell comprising an electrode assembly and a current collector for connecting the electrode assembly to a terminal of the battery cell.

The current collector may comprise a first section arranged along a first side of the electrode assembly, configured for attachment to the electrode assembly, and a second section extending from a first end of the first section along the first side of the electrode assembly, comprising a tapered surface configured to avoid contact with the electrode assembly during a crush event along the first side of the electrode assembly. Viewed from another perspective, the second section may be provided with a tapered surface sloping away from the electrode assembly.

The crush event along the first side may be caused by a dropping of the cell, an external impact such as during a car crash, or any other event that risks causing a displacement of the internal components of the battery cell. As the first section of the current collector may be arranged so as to rigidly extend along the first side of the electrode assembly, i.e., the same side along which the crush event is happening and thus in the path of the crush, there is a risk that the current collector will be pushed into the electrode assembly and cause damage thereto.

It will be appreciated that, during the crush event, the current collector may be displaced unevenly towards the electrode assembly, such that the current collector may be rotated or pivoted towards the electrode assembly instead of moving in a purely translational fashion. Therefore, an end of the current collector may be the first part of the current collector to make contact with the electrode roll assembly. The end of the current collector may be part of a second section that extends further along the first side of the electrode assembly, extending from the first section of the current collector.

Thus, by forming this second section with a tapered surface configured to avoid contact with the electrode assembly, the risk of damage to the electrode assembly during a crush event along the first side of the electrode assembly may be advantageously reduced. The second section may extend from a first end of the first section, which may be the end of the first section that is expected to move the most towards the electrode assembly during the crush event. That is, a second end of the first section (i.e., the other end from the first end) may be more fixed in place than the first end, or arranged further away from the first side of the electrode assembly such that the second end of the first section of the current collector poses a lesser risk of damaging the electrode assembly during the crush event.

It will be appreciated that the severity of the crush event may vary. Thus, it may not always be possible to entirely avoid contact between the current collector and the electrode assembly. To account for such situations, the tapered surface may be a flat tapered surface configured to distribute an impact force applied to the electrode assembly when, during the crush event, the flat tapered surface is brought into contact with the electrode assembly. Therefore, even if the crush event is so severe as to cause significant deformation and/or displacement of the internal components of the battery cell, the electrode assembly is still protected from a piercing type of damage that could cause a short-circuit and catastrophic destruction of the battery cell.

By flattening the tapered surface in this way, the surface area of the tapered surface that is (at least initially) brought into contact with the electrode assembly may be increased, and thus an impact force imparted upon the electrode assembly by the current collector may be distributed about the flat tapered surface. Hence, the pressure that is incident upon the electrode assembly during a more severe crush event may be advantageously reduced.

The flat tapered surface may be formed as a chamfer or bevel sloping away from the electrode assembly. Such shapes can be easily formed by standard manufacturing techniques and thus the manufacture of a current collector having such a flat tapered surface may be advantageously simplified.

In some examples, the tip formed at the narrowest end of the flat tapered surface may be rounded or blunted. The same may apply to all corners and edges of the current collector that are arranged near the first side of the electrode assembly, such that the risk of a piercing damage to the electrode assembly during a crush event is further reduced.

The second section may comprise an electrically non-conductive material. For example, the second section may be entirely formed of the electrically non-conductive material, or it may have a coating that is electrically non-conductive. The electrically non-conductive material may be plastic, ceramic, or the like.

Therefore, if the crush event is so severe as to cause the second section of the current collector to penetrate the electrode assembly, then the risk of the penetrating part of the current collector forming a current path between the anode and cathode of the electrode assembly may be advantageously reduced, thereby reducing the risk of a short-circuit in the electrode assembly.

The second section of the current collector may be further configured to reinforce the first section of the current collector. For example, the second section may comprise a brace, a bridging portion, or some other reinforcement structure, depending on the particular form of the first section of the current collector.

In one example, the first section of the current collector may comprise multiple plates for welding or otherwise attaching to a connective tab of the electrode assembly. In this example, the reinforcement structure may take the form of a brace across the multiple plates, thereby fixing their spacing relative to each other and protecting the connection between the electrode assembly and the first section of the current collector from significant damage.

The first section of the current collector may be more limited in its shape, size, or form, due to its configuration for attachment to the electrode assembly. For example, it may be desired for the first section to efficiently maximize a contact and/or attachment surface with the electrode assembly (or, in particular, a connective tab thereof). Thus, the first section may not necessarily be entirely optimized for structural strength and may not be able to accommodate reinforcement structures that could create undesirable current paths proximal to the attachment to the electrode assembly.

Therefore, the second section of the current collector, not being limited in this way through attachment to the electrode assembly, may have a greater flexibility in respect of its size, shape, or form and may thus advantageously be configured to provide structural support to the first section of the current collector. Hence, the overall structural strength of the current collector may be improved, which may therefore improve the structural resistance of the current collector against buckling or otherwise deforming or displacing during the crush event, thereby further reducing the risk of damage to the electrode assembly during the crush event.

The second section of the current collector may be further configured to reinforce a casing of the battery cell against deformation during the crush event. For example, the second section may abut (e.g., directly or via additional structure(s)) or otherwise provide a structural resilience along the inner wall of the casing of the battery cell that is adjacent/parallel to the first side of the electrode assembly. Therefore, when the crush event occurs along this wall/side of the casing, the buckling/deformation of the casing may be mitigated by the additional structural resilience provided by the current collector. Thus, damage to the electrode assembly may be further reduced during the crush event.

In some examples, the battery cell may further comprise an insulating element (which may be referred to as a spacing element, e.g., if the element is additionally configured for electrical insulation or merely spacing) arranged between at least the first section of the current collector and a casing of the battery cell. Thus, the casing may be formed of metal or another conductive material with a reduced risk of short-circuiting between the current collector and the casing. Moreover, the insulating element may advantageously provide further damping and mechanical protection during the crush event.

The insulating/spacing element may also be arranged between the second section of the current collector and the casing of the battery cell, and/or the insulating/spacing element may be arranged between the electrode assembly and the casing of the battery cell, i.e. along a part of the first side of the electrode assembly where the current collector does not extend. The insulating/spacing element may be further configured to reduce the damage caused to the electrode assembly during a crush event. For example, the insulating/spacing element may be formed of a soft or malleable plastic or a similar material such that the electrode assembly may be protected from any sharp edges formed by, e.g., a buckling of the casing.

The current collector may further comprise mating elements configured to mate with corresponding mating elements on the insulating/spacing element and/or the casing to thereby retain the current collector in position in the battery cell. For example, the current collector may have formed thereon a recess or through-hole, which may complement a protrusion on the insulating/spacing element or the inside of the casing such that the mating of the recess and the protrusion allows the current collector to be retained in its position installed within the battery cell.

Therefore, the risk of displacement or dislodging of the current collector during a crush event, or the degree to which the current collector is dislodged or displaced, may be advantageously reduced, which may in turn reduce the risk of damage to the electrode assembly caused by a contact between the current collector and the electrode assembly.

The current collector may further comprise a third section extending from the second end of the first section (i.e., the other end as that from which the second section extends), configured to connect to the terminal of the battery cell, such that a current path between the electrode assembly and the terminal is formed by the third section. The connection of the third section to the terminal may preferably be a rigid or fixed connection to thereby provide structural support for the second end of the first section.

The third section may preferably have a decreasing cross-sectional area along the current path formed between the electrode assembly and the terminal. Thus, the weight of the third section may be reduced even if the third section is extended some way to reach the connection to the terminal, without significantly damaging the resistive properties of the current path formed between the electrode assembly and the terminal.

In some examples, the current collector may be substantially L-shaped. That is, the current collector may be a 'side current collector' such that the connection of the current collector to the electrode assembly may be along a first side of the electrode assembly, while the connection of the current collector to the terminal of the battery cell may be along a second side of the electrode assembly adjacent to the first side, for example at a top or bottom of the battery cell.

The electrode assembly may have a substantially rectangular profile, for example being configured for installation into a prismatic (and substantially cuboidal) battery cell. That is, the electrode assembly may be formed as a stack or roll of sheets, comprising an anode, a cathode, and a spacer arranged between the anode and the cathode to thereby provide the electrode assembly with its ability to store electrical energy. The shape of the electrode assembly may be cuboidal to conform with a substantially cuboidal form factor of the battery cell. In such an arrangement, the current collector may be arranged around a corner of the substantially rectangular profile.

The inner corner of the L-shaped current collector may be configured to reduce the impact of the current collector on the electrode assembly during a crush event. For example, the inner vertex of the L-shaped current collector may be smooth or curved so as to impart a substantially crushing force on the electrode assembly rather than a sharper piercing or squeezing force, which may cause the electrode assembly to short-circuit and thereby cause catastrophic damage to the battery cell.

According to an aspect of the present disclosure, there is provided a current collector adapted for use in a battery cell as substantially described above.

The current collector may be formed from a single piece of folded sheet metal so as to advantageously reduce the manufacturing complexity of the current collector. The metal may be chosen for structural, electrical and/or other considerations. For example, the sheet metal may comprise copper, steel, or the like.

A method for manufacturing such a current collector may comprise machining the piece of sheet metal, and folding the piece of sheet metal to thereby form the current collector.

The machining of the sheet metal may comprise cutting (e.g., laser cutting), etching, drilling, sanding, and/or any other suitable machining process. The folding may then be performed manually or automatically using one or more folding machines. Thus, current collectors such as that described above may be manufactured on a large scale and for low cost.

The installation of such current collectors into battery cells, as discussed above, may then reduce the risk of catastrophic failure of said battery cells during crush events. Therefore, battery modules, packs, or other assemblies comprising such battery cells may therefore have a longer and safer operational life, requiring less repair or replacements. The environmental impact of such battery assemblies may therefore be advantageously improved.

In any event, numerous advantages, some of which are described above, may be realized through the adapted end profile of a current collector in a cell. These advantages, as well as others, may be further appreciated through a description of specific illustrated embodiments.

### Brief Description of the Drawings

One or more embodiments of the present disclosure are described below, by way of example only, and with reference to the following figures, in which:
Figure 1 schematically shows a prismatic cell as an example of a battery cell;
Figure 2A schematically shows a cross-sectional view of a portion of the prismatic cell shown in figure 1, containing a comparative example of a current collector, against which embodiments of the present disclosure may be compared;
Figure 2B schematically shows a perspective view of the portion of the prismatic cell shown in figure 2A, with the casing removed;
Figure 2C schematically shows a cross-sectional view of the portion of the prismatic cell shown in figures 2A and 2B, during a crush event along a first side of the electrode assembly;
Figure 3A schematically show the same cross-sectional view as figures 2A and 2C, wherein the prismatic cell contains a current collector according to an embodiment of the present disclosure;
Figure 3B shows the same prismatic cell having a current collector according to an embodiment of the present disclosure as that shown in figure 3A, during a crush event
Figure 3C shows the same prismatic cell as figure 3B during a more severe crush event;
Figures 4A and 4B schematically show isolated side views of a first and second section of current collectors according to embodiments of the present disclosure;
Figures 5A and 5B schematically show isolated front-on views of a first and second section of current collectors according to embodiments of the present disclosure; and
Figures 6A and 6B show perspective and side views of a current collector made from folded sheet metal, according to an embodiment of the present disclosure.

### Detailed Description

The present disclosure is described in the following by way of a number of illustrative examples. It will be appreciated that these examples are provided for illustration and explanation only and are not intended to be limiting on the scope of the disclosure.

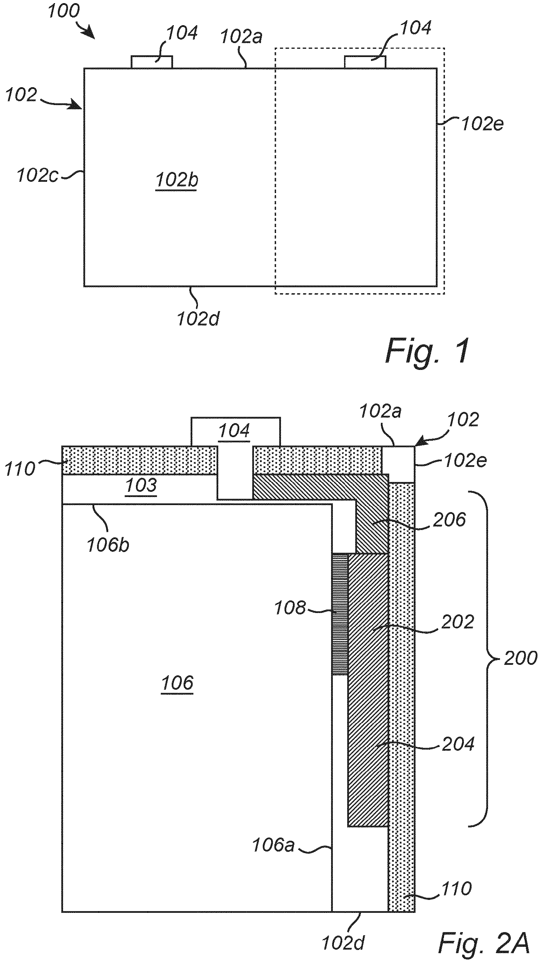

Figure 1 schematically shows a battery cell 100, also referred to hereinafter as 'cell 100', having a prismatic form factor. The cell 100 may have a substantially cuboidal shape, thereby having a rectangular profile, as shown in figure 1.

The cell 100 may comprise a casing 102, which may determine the general form factor of the cell 100 and may be configured (e.g., in its dimensions) for installation into a larger battery module, battery pack, or other battery assembly. The casing 102 may preferably be rigid and resistant to external shocks or impacts, for example being made of metal such as aluminum, or made of a high density plastic.

The casing 102 may be formed from a plurality of sides joined together or may be formed of substantially one or two pieces, e.g., by extrusion, additive manufacturing (AM), or some other manufacturing technique. According to an example, the casing 102 may comprise a height (extending vertically as shown in figure 1), a width (extending horizontally as shown in figure 1), and a thickness (not visible).

The prismatic form factor for the cell 100, as defined substantially by the casing 102, may comprise two larger faces 102b (other larger face not visible) spaced apart by a relatively small distance in the thickness direction, and a plurality of comparatively smaller faces 102a, 102c, 102d, 102e bridging between the two larger faces 102b. The casing 102 may be formed by providing an open cuboidal shape, and sealing the open face of the open cuboidal shape with a lid. For example, the lid may form the upper face 102a of the casing 102 (shown only as the top line in figure 1).

Internal components of the cell 100 may be introduced into the casing 102 and then a lid 102a may be provided thereover and sealed in placed to thereby contain the internal components. The lid 102a may be attached in a substantially watertight fashion so as to contain liquid electrolyte in the cell 100, for example. The lid 102a may be provided with a vent, an injection port for injecting electrolyte, and/or other features, the details of which are outside the scope of the present disclosure.

In the illustrated example, provided on the casing 102 of the cell, and extending therethrough to an internal of the cell 100, are a pair of terminals 104. One of the terminals 104 may be an anode and the other may be a cathode. The terminals 104 may be riveted through the casing 102, e.g., through the lid 102a thereof, and provided with a gasket therearound to improve the watertight seal that the casing 102 may preferably provide. The terminals 104 may be made of any suitable conductive material, although the particular manufacture and installation of the terminals 104 is outside the scope of the present disclosure.

Both of the terminals 104 are shown installed at an upper face 102a of the casing 102 of the cell 100. However, it will be appreciated that either of the terminals 104 may instead be provided at any location around the casing 102 of the cell 100.

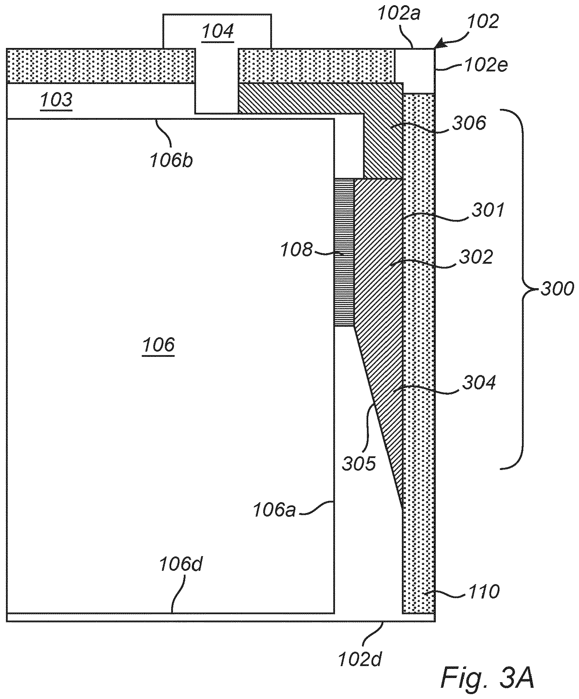

In the discussion of figures 2A to 2C, and 3A to 3C, a right-hand portion of the cell 100, as indicated by the dotted box, will be focused on for the purpose of clear illustration.

Figure 2A shows a cross-sectional view of the portion of the cell 100 indicated by the dotted box in figure 1, revealing an internal space 103 thereof. As shown in this figure, the cell 100 may comprise a terminal 104 that extends through the casing 102 and into the internal space 103 of the cell 100.

The cell 100 may further comprise an electrode assembly 106, which may be an electrode roll or an electrode stack, for example, comprising a plurality of sheets. The plurality of sheets may comprise an anode, a cathode, and a separator for separating the anode from the cathode, thereby providing the electrode assembly 106 with its ability to store electrical energy. The electrode assembly 106 may comprise, at a side 106a thereof, a connective tab 108 for electrically connecting to other components of the cell 100.

The connective tab 108 may be an extension from the roll or stack of one or more cathode sheets, which may then be provided with notches, feathering, or some other processing to further facilitate the connection of the connective tab 108 to other electrical components.

The cell 100 may be further provided with one or more spacers 110, some of which being electrical insulators, for appropriately spacing, retaining, etc. internal components of the cell 100 in their respective desired positions, and/or electrically insulating internal components of the cell 100 from each other or from the casing 102.

The electrode assembly 106 may be connected to the terminal 104 via a current collector 200. The current collector 200 may form a current path between the electrode assembly and the terminal 104 and may thus be formed from any suitable material such as zinc, steel, copper, etc., although the choice of material may further depend on whether the current collector 200 is connecting the anode side or the cathode side of the cell 100.

The current collector 200 may comprise a first section 202, a second section 204 extending from a first end of the first section 202, and a third section 206 extending from a second end of the first section 202, configured to connect to the terminal 104 and thereby form a current path between the electrode assembly 106 and the terminal 104.

When charging or discharging the cell 100, current may flow between the terminal 104 and the electrode assembly 106 via the current path created by the current collector 200. In particular, current may flow through the third section 206 and to the first section 202 where an attachment is formed between the first section 202 and the connective tab 108 of the electrode assembly 106.

According to the illustrated comparative example, the second section 204 may have a substantially uniform profile, for example taking a rectangular form. In other comparative examples, the second section 204 may have a rounded profile.

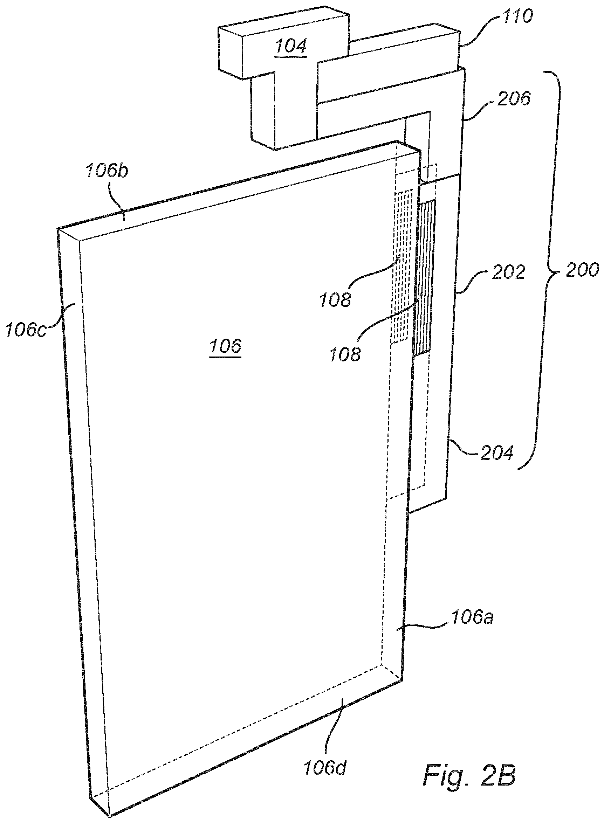

Figure 2B schematically shows an example form of the current collector 200 wherein the electrode assembly 106 may have multiple connective tabs 108 welded or otherwise attached to corresponding plates constituting the first section 202 of the current collector 200.

The electrode assembly 106 may have a substantially rectangular profile and the current collector 200 may be substantially L-shaped and arranged around a corner of the electrode assembly 106. That is, the current collector 200 may extend along a first side 106a of the electrode assembly 106 and a second side 106b of the electrode assembly 106. Such an arrangement may be referred to as a 'side current collector 200'.

It will be appreciated that the extension of the current collector 200 along the sides 106a, 106b of the electrode assembly 106 is purely illustrative and may in reality be longer, shorter, more or less distant from the electrode assembly 106, etc.

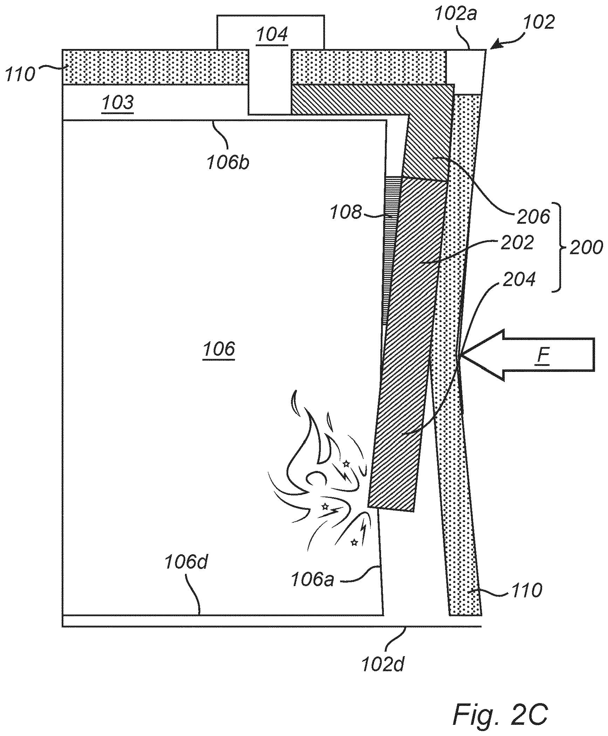

As shown in figure 2C, according to this comparative example, and as realized as a part of the present disclosure, during a crush event as indicated by the crushing force arrow F, the second section 204 may be pushed into the electrode assembly 106. This may cause a failure of the electrode assembly 106 (e.g., a short-circuit), which may lead to a catastrophic destruction of the cell 100.

Therefore, according to the present disclosure, there is provided an improved current collector 300, shown in figure 3A in place of the comparative example current collector 200 discussed in relation to figures 2A to 2C. The current collector 300 is adapted for reducing the risk of damage to the electrode assembly 106 during a crush event and thus reducing the risk of catastrophic failure of the cell 100.

The current collector 300 may comprise a first section 302 arranged along a first side 106a of the electrode assembly 106, and configured for attachment to the electrode assembly 106. For example, the first section 302 may comprise legs or plates (not shown in detail) that provide a surface to which a connective tab 108 of the electrode assembly 106 may be bonded (e.g., welded).

The current collector 300 may further comprise a second section 304 extending from a first end of the first section 302 along the first side 106a of the electrode assembly 106. Furthermore, the first section 302, having an electrical connection to the electrode assembly 106 via a connective tab 108 thereof, may be connected to the terminal 104 of the cell 100 via a third section 306 of the current collector 300.

The third section 306 may comprise a vertex such that the current collector 300 as a whole is substantially L-shaped. In some examples, the third section 306 may be separate to the first and section sections 302, 304, while in other examples, the first, second, and third sections 302, 304, 306 may be integrally formed as a single piece.

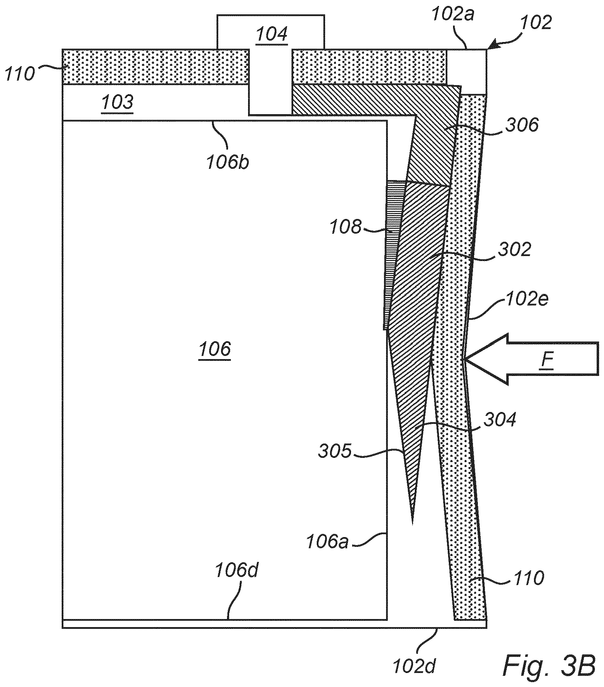

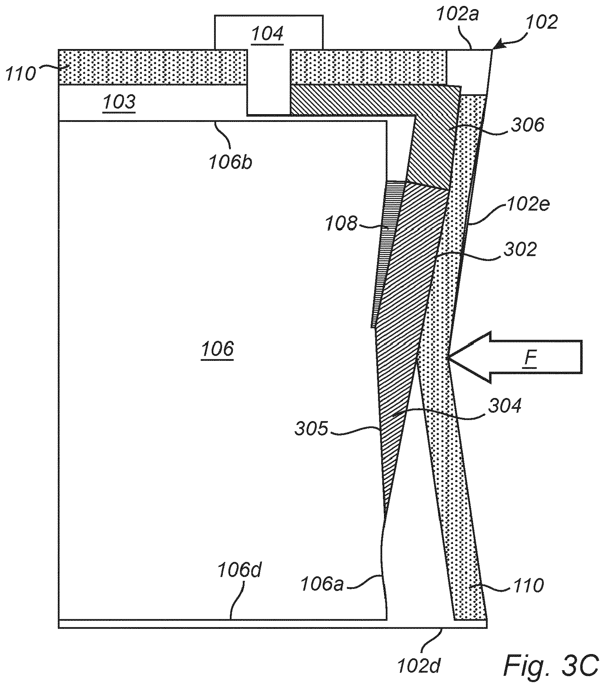

The second section 304 of the current collector may comprise a tapered surface 305 configured to avoid contact with the electrode assembly 106 during a crush event F along the first side 106a of the electrode assembly 106. The advantageous nature of the tapered surface 305 of the second section 304 of the current collector 300 can be more readily appreciated with reference to figures 3B and 3C.

Figure 3B shows the same view of the portion of the cell 100 as figure 3A, during a crush event indicated by the crush force arrow F. During the crush event F, the casing 102 of the cell 100 may buckle, deform, break, or otherwise give way to allow the force F to cause a displacement of internal components of the cell 100. The crush event F may be caused by a dropping of the cell 100, or some impact such as during a car crash or similar event.

In a similar manner as that illustrated in figure 2C, the crush event F may cause the current collector 300 to be pushed towards the electrode assembly 106.

The third section 306 may be more structurally resilient than the first and second sections 302, 304 during the crush event F, for example as a result of extending primarily parallel to the crushing force F, or being formed of a thicker/stronger material. The third section 306 may be physically attached to the terminal 104 such that this connection provides further resistance against the crush event F. The structural connection of the third section 306 to the second end of the first section 302 may thus result in the second end of the first section 302 moving towards the electrode assembly 106 less than the second section 304 of the current collector 300 extending from the first end of the first section 302. Thus, the current collector 300 may be pivoted/rotated into the electrode assembly 106 by the crush event F.

However, according to the beneficial provision of a tapered surface 305 in the second section 304 of the current collector 300, the current collector 300 may be prevented from excessively and damagingly contacting the electrode assembly 106. Thus, a failure (e.g., short-circuiting) of the electrode assembly 106 may be prevented, thereby preventing a potential catastrophic failure of the cell 100.

In some examples, a particular configuration of the tapered surface 305 may be determined based on an expected deformation or motion of the current collector 300 during the crush event F. For example, it will be appreciated that a greater amount of tapering of the tapered surface 305 may be preferred if it is expected for the current collector 300 to be more deformed/displaced during the crush event F. A lesser amount of tapering of the tapered surface 305 may lessen the sharpness of the corner at the transition between the first section 302 and the second section 304 and thus reduce the risk of this corner damaging the electrode assembly 106.

It will thus be appreciated that the particular form of the tapered surface 305 may vary depending on the implementation. For example, the tapered surface 305 may be a flat tapered surface 305 which thereby forms a contact surface for distributing an impact force when contacting the electrode assembly 106 during a crush event. The flat tapered surface 305 may be formed as, e.g., a chamfer or a bevel.

Figure 3C illustrates the same portion of the cell 100 and cross-sectional view as that shown in figure 3B. However, the crush event F illustrated in figure 3C is more severe than the crush event F illustrated in figure 3B. It can be seen that the deformation/buckling of the casing 102 and the third section 306 of the current collector 300 may be greater, such that the second section 304 of the current collector 300 may be moved further towards the electrode assembly 106.

That is, as shown in figure 3C, the crush event F may be so severe as to cause the current collector 300 to substantially contact the electrode assembly 106 of the cell 100. It can be seen in figure 3C that the configuration of the tapered surface 305 as a flat tapered surface 305 may advantageously allow for the tapered surface 305 to distribute an impact force imparted upon the electrode assembly 106 during the crush event F. Thus, the pressure applied to the first side 106a of the electrode assembly 106 by the current collector 305 may be reduced, thereby reducing the risk of failure of the electrode assembly 106 and the cell 100.

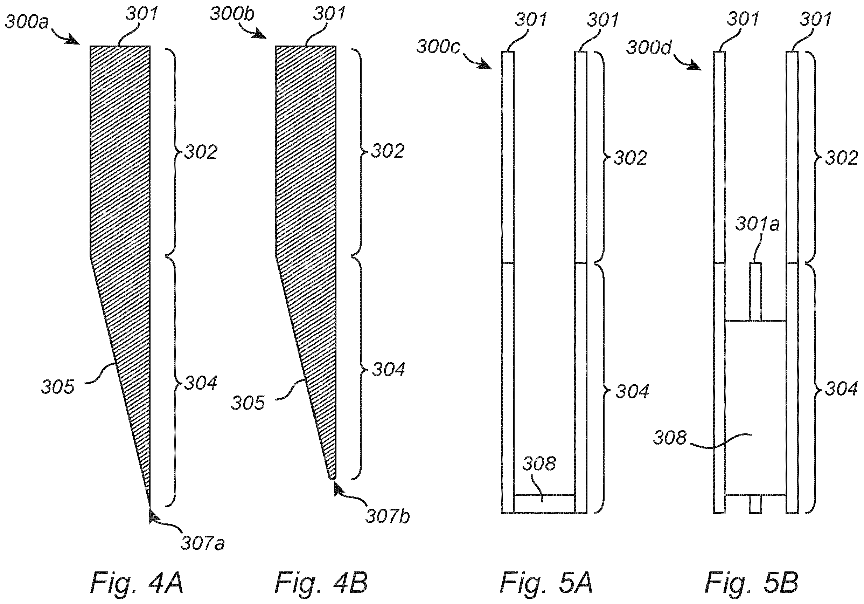

Figures 4A and 4B show isolated side views 300a, 300b of the first and second sections 302, 304 of a current collector 300 according to embodiments of the present disclosure. As referred to herein, a 'side' of the current collector 300 may be perpendicular to a front face of the current collector 300 that is faced towards the electrode assembly 106 when installed in the cell 100.

The first and second sections 302, 304 of the current collector 300 may be formed of a same plate 301, which may also be referred to as a 'leg' of the current collector 300. That is, the first section 302 of the current collector 300 may be an upper section of the plate 301, while the second section 304 of the current collector 300 may be a lower section of the plate 301, as illustrated in figures 4A and 4B.

In some examples, the second section 304 may be a separate component attached to the first section 302, and may be made from or otherwise comprise another material than the first section 302 (which may preferably be formed of a conducting metal), such as a non-electrically conductive material like plastic or ceramic.

The embodiment 300a shown in figure 4A corresponds substantially to the form of the current collectors 300 shown in figures 3A to 3C in that the tapered surface 305 may continue to an end 307a of the plate 301.

However, figure 4B illustrates an alternative embodiment 300b, wherein the end 307b of the tapered surface 305 is rounded or otherwise blunted. Thus, the risk of the end 307b of the plate 301 piercing the electrode assembly 106 during a crush event F can be further reduced.

Figures 5A and 5B show isolated front views 300c, 300d of the first and second sections 302, 304 of a current collector 300 according to embodiments of the present disclosure.

As shown in these figures, the first section 302 and the second section 304 may respectively be formed of multiple plates 301, which may be parallel to each other. As demonstrated in figure 5B, the second section 504 may comprise more plates 301, 301a than the first section 302, wherein the additional plate 301a may advantageously provide additional structural support.

The second section 304 may be further configured to reinforce the first section 302. For example, the second section 304 may comprise a brace 308 that bridges between the plates 301 and provides additional rigidity to the structure of the current collector 300. The brace 308 may be plate shaped, as shown in figure 5B, and arranged to face the electrode assembly 106 when installed in the battery cell 100 such that the plate shaped brace 308 may form an enhanced contact surface for further distributing an impact force imparted upon the electrode assembly 106 during the crush event F.

While the first and second sections 302, 304 are shown as being substantially the same length, it will be appreciated that this is purely illustrative and the relative lengths of the first sections 302 and the second section 304 may instead be different to that illustrated.

Furthermore, instead of being formed of plates 301, it will be appreciated that the current collector 300 may instead be a substantially solid structure, or a non-linear structure, which may exploit the versatility of additive manufacturing techniques or other manufacturing techniques that may readily create complex shapes. Moreover, the current collector 300 may be formed of a single piece or multiple connected pieces, depending on the implementation.

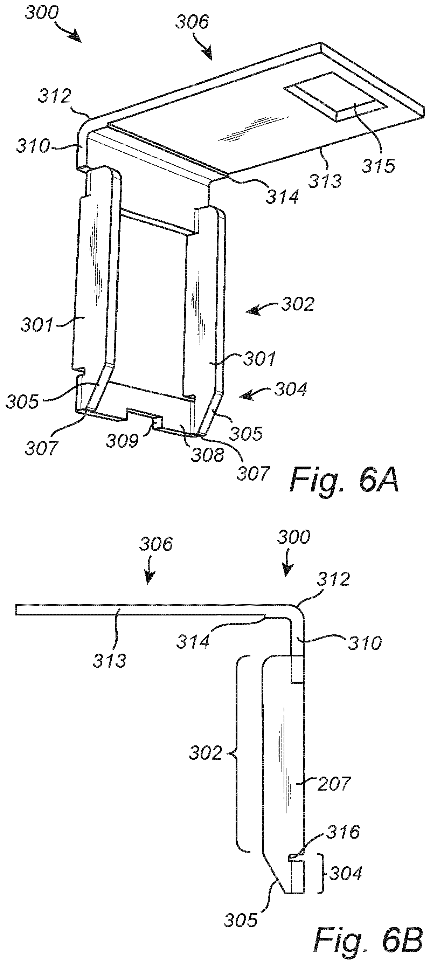

Figures 6A and 6B show an example of a current collector 300 according to an embodiment of the present disclosure, wherein the current collector 300 is formed from folded sheet metal.

Many of the elements discussed previously can be identified in this example current collector 300. For example, the current collector 300 may comprise a first section 302 comprising a pair of plates 301 adapted for welding (or otherwise attaching) to a connective tab 108 of the electrode assembly 106.

The plates 301 may extend from a first end of the first section 302 to a second section 304, which may be chamfered or beveled at an end 307 thereof so as to form a tapered surface 305, which in this example is a flat tapered surface 305. In this example, the first section 302 and the second section 304 are integrally formed as part of a piece of folded sheet metal that constitutes the current collector 300.

The second section 304 may slope away from the electrode assembly 106 when installed in the cell 100, and the second section 304 may not be attached to the electrode assembly 106. As will be appreciated from figures 6A and 6B, when the current collector 300 is in place in the cell 100 (e.g., as schematically shown in 3A), the current collector 300 may serve as structural support for the casing 102 of the cell 100 and assist in resisting a deformation of the casing 102 during a crush event F. Thus, the second section 304 may further improve the structural integrity of the cell 100.

The second section 304 may further comprise a brace 308 extending between the plates 301 which may advantageously reinforce the first section 302. The brace 308 may preferably be confined to the second section 304 such that the current flow through the first section 302 (i.e., from the electrode assembly 106) is not disturbed by the creation of a current path through the brace 308 and thus between the plates 301.

The brace 308 may comprise a mating element 309 for mating with a corresponding mating element on, e.g., an insulating or spacing element arranged within a casing 102 of the cell 100.

The current collector 300 may further comprise a third section 306 integrally formed by the folded sheet metal. The third section 306 may extend from a second end of the first section 302 and form a current path from an electrode assembly 106 to a terminal 104 of the cell 100.

The third section 306 may be formed as two angled parts 310, 313 that meet at a vertex 312, which in this example may be 90 degrees. The form of the third section 306 may give the current collector 300 a substantially L-shaped profile, as shown in figure 6B. The third section 306 may further comprise a step 314 that decreases the cross-sectional area of the current collector 300 along the current path between the electrode assembly 106 and the terminal 104. Hence, the second part 313 of the third section 306 may be made longer and thinner to reach a terminal 104 that is arbitrarily far from the electrode assembly 106 connection, without negatively affecting the resistive properties of the current collector 300.

The third section 306 may further comprise a terminal collar 315 configured for resiliently attaching/connecting to the terminal 104 of a cell 100. The terminal collar 315 may comprise a through-hole in the current collector 300 such that a terminal part 104 can extend at least partially therethrough.

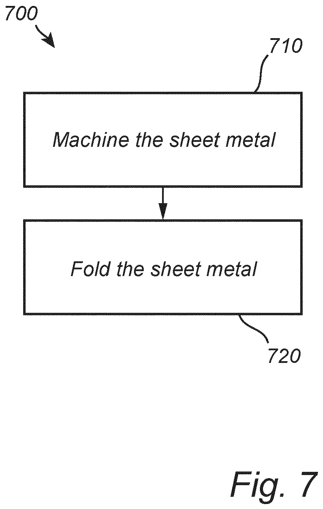

Figure 7 schematically illustrates a method 700 for manufacturing a current collector from a piece of sheet metal, such as the current collector 300 shown in figures 6A and 6B. As shown therein, the method 700 may first comprise machining 710 the sheet metal. Machining 710 the sheet metal may comprise any number of processes such as cutting (e.g., using water jets, lasers, etc.), drilling, shaving, and the like.

The sheet metal may be provided with a constant width and/or thickness, and machining 710 of the sheet metal may thereby form a change in width and/or thickness (e.g., forming the step 314 in the third section 306). For the current collector 300 shown in figures 6A and 6B, for example, the machining 710 may further comprise forming and shaping the plates 301 as to form the first section 302 and the second section 304, also forming the mating element 309, the tapered surface 305, the terminal collar 315, and/or other elements of the current collector 300.

The machining 710 may further comprise a formation of folding aids 316, which may provide localized weakenings configured for allowing the folding of the sheet metal along desired axes. The folding aids 316 may double as further mating elements when the sheet metal has been folded, in some examples.

The method 700 may then comprise a step of folding 720 the sheet metal, to thereby form a current collector, such as the current collector 300 shown in figures 6A and 6B. The folding 720 may be performed manually or by automatic folding machines, depending on the implementation. Moreover, the folding 720 may be performed in one combined step or as a series of folding steps, depending on the implementation.

Once folded, the current collector 300 may thereby comprise the first section 302 for arranging along a first side 106a of the electrode assembly 106, and configured for attachment to the electrode assembly 106, and a second section 304 extending from a first end of the first section 302 along the first side 106a of the electrode assembly 106, comprising a tapered surface 305 configured to avoid contact with the electrode assembly 106 during a crush event F along the first side 106a of the electrode assembly 106.

By manufacturing a current collector 300 according to such a method 700, the current collector 300, having many advantageous features as described above, may be produced rapidly at a large scale and for a low cost. The method 700 may be readily automated as part of a wider cell manufacture and assembly process, for example.

It will be appreciated that the particular configuration of a current collector, as described above in relation to figures 6A and 6B, is but one example of many which may fall within the scope of the present disclosure, and this illustrated example has been provided merely to assist in understanding particular aspects of the present disclosure.

Any reference to prior art documents or comparative examples in this specification is not to be considered an admission that such prior art is widely known or forms part of the common general knowledge in the field.

Furthermore, whilst the present disclosure is susceptible to various modifications and alternative forms, specific embodiments are shown and described by way of example in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

## Claims

1. A battery cell, comprising:
an electrode assembly; and
a current collector for connecting the electrode assembly to a terminal of the battery cell, the current collector comprising:
a first section arranged along a first side of the electrode assembly, and configured for attachment to the electrode assembly; and
a second section extending from a first end of the first section along the first side of the electrode assembly, comprising a tapered surface configured to avoid contact with the electrode assembly during a crush event along the first side of the electrode assembly.

2. The battery cell according to claim 1, wherein the tapered surface is a flat tapered surface configured to distribute an impact force applied to the electrode assembly when, during the crush event, the flat tapered surface is brought into contact with the electrode assembly.

3. The battery cell according to claim 2, wherein the flat tapered surface is formed as a chamfer or bevel sloping away from the electrode assembly.

4. The battery cell according to any preceding claim, wherein the second section of the current collector is configured to reinforce the first section of the current collector.

5. The battery cell according to any preceding claim, wherein the second section of the current collector is configured to reinforce a casing of the battery cell against deformation during the crush event.

6. The battery cell according to preceding claim, further comprising an insulating element arranged between at least the first section of the current collector and a casing of the battery cell.

7. The battery cell according to any preceding claim, wherein the current collector further comprises mating elements configured to mate with corresponding mating elements on the insulating element and/or the casing to thereby retain the current collector in position in the battery cell.

8. The battery cell according to any preceding claim, wherein the current collector further comprises a third section extending from a second end of the first section, configured to connect to the terminal of the battery cell, such that a current path between the electrode assembly and the terminal is formed by the third section.

9. The battery cell according to claim 8, wherein the third section has a decreasing cross-sectional area along the current path formed between the electrode assembly and the terminal.

10. The battery cell according to any preceding claim, wherein the current collector is substantially L-shaped.

11. The battery cell according to claim 10, wherein the electrode assembly has a substantially rectangular profile, and the current collector is arranged around a corner of the substantially rectangular profile.

12. The battery cell according to any preceding claim, wherein the second section comprises an electrically non-conductive material.

13. A current collector adapted for use in a battery cell according to any preceding claim.

14. The current collector according to claim 13, formed from a single piece of folded sheet metal.

15. A method for manufacturing the current collector according to claim 14, comprising:
machining the piece of sheet metal; and
folding the piece of sheet metal to thereby form the current collector.
